# EUROPÄISCHE PATENTSCHRIFT

(11) **EP 4 245 536 B1**
(45) Veröffentlichungstag und Bekanntmachung des Hinweises auf die Patenterteilung: **01.04.2026**
(21) Anmeldenummer: 23156948.4
(22) Anmeldetag: 16.02.2023
(51) Int. Cl.: B32B 37/06, B30B 15/06

(54) **LAMINIERWERKZEUG SOWIE EINE LAMINIERVORRICHTUNG**
LAMINATING TOOL AND LAMINATING DEVICE
OUTIL DE LAMINAGE ET DISPOSITIF DE LAMINAGE

(30) Priorität: 18.03.2022 DE 102022106454
(43) Veröffentlichungstag der Anmeldung: 20.09.2023
(73) Patentinhaber: Bundesdruckerei GmbH, 10969 Berlin (DE)
(72) Erfinder: Siebert, Martin, 10965 Berlin (DE)
(74) Vertreter: Mammel und Maser Patentanwälte PartG mbB

(56) Entgegenhaltungen:
- EP-A1- 3 608 103
- EP-B1- 1 708 870
- DE-B3- 102004 045 735

## Beschreibung

Die Erfindung betrifft ein Laminierwerkzeug sowie eine Laminiervorrichtung zum Laminieren von mehreren in einem Stapel angeordneten Schichten zu einem Laminatverbund.

Aus der DE 10 2017 112 509 A1 ist eine Laminierstation zum Laminieren von mehreren folienartigen Schichten, die in einem Stapel angeordnet sind, zu einem Laminatverbund bzw. Schichtverbund bekannt. Die einzelnen Schichten können übereinanderliegend von einer Laminierkassette aufgenommen werden. Ein Laminierwerkzeug mit einem Heizsegment wird unter Zwischenschaltung eines Laminierblechs zu dem Stapel positioniert. Die folienartigen Schichten aus thermoplastischen Material werden darauffolgend unter Temperatur und Druck miteinander verbunden und ein Laminatverbund hergestellt.

Aus der WO 2018/046628 A1 ist des Weiteren eine Laminiervorrichtung bekannt, welche auf einem rotierbaren Tisch mehrere hintereinander angeordnete Stationen umfasst. Auf diesem Tisch bzw. Karussell ist eine Beladestation, zumindest eine Heizstation und darauffolgend zumindest eine Kühlstation sowie anschießend eine Entladestation vorgesehen. Einzelne übereinander gestapelte Schichten können in einer Laminierkassette der Entladestation zugeführt und darauffolgend voll durch die weiteren Stationen hindurchgetaktet werden.

Aus der DE 10 2015 116 267 A1 ist des Weiteren eine Laminiervorrichtung bekannt. Zwischen einem oberen und einem unteren Laminierwerkzeug kann ein Stapel von Schichten zur Herstellung eines Laminatverbundes positionierbar sein. Zum Aufheizen der Schichten ist eine Prägeplatte vorgesehen, welche Hohlkammern umfasst, die mit einem hei-ßen Medium zum Aufheizen und darauffolgend mit einem Kühlmedium zum Abkühlen des Laminatverbundes durchströmbar sind. Diese Prägeplatte umfasst eine zum Stapel weisende Trägerplatte, welche durch das Medium aufgeheizt und gekühlt wird. Zusätzlich kann die Trägerplatte durch eine Bestromung aufheizbar sein. Diese Trägerplatte ist Teil der Hohlkammern aufweisenden Prägeplatte.

Aus der DE 10 2004 045 735 B3 ist eine Laminierpresse zum Laminieren von Multilayern bekannt. Um eine gute Lamination auch in Randbereichen des Multilayers sicherzustellen, ist bei dieser Laminierpresse ein Heizelement vorgesehen, welches sich vollflächig zumindest innerhalb einer Pressfläche eines Pressstempels erstreckt. Zusätzlich sind im Randbereich der Pressfläche zwei Edelstahlstreifen im Abstand zueinander angeordnet, welche zusätzlich bestromt werden, um eine Heizleistung in den Randbereichen des Multilayers sicherzustellen.

Aus der EP 1 708 870 B1 ist eine weitere Laminierpresse bekannt. Bei dieser Laminierpresse ist vorgesehen, dass an einer Pressplatte eine Isolierschicht anliegend durch eine Heizfolie gehalten ist, welche fest auf der Oberfläche der Pressplatte angeordnet ist.

Der Erfindung liegt die Aufgabe zugrunde, ein Laminierwerkzeug sowie eine Laminiervorrichtung vorzuschlagen, welche eine Erhöhung des Durchsatzes beim Laminieren von in einem Stapel angeordneten Schichten zu einem Laminatverbund ermöglicht.

Diese Aufgabe wird durch ein Laminierwerkzeug für eine Laminiervorrichtung mit einem Pressstempel, der eine zum Stapel weisende Pressfläche aufweist, die sich innerhalb eines Pressbereiches erstreckt, gelöst, wobei ein sich zumindest entlang der Pressfläche des Pressstempels erstreckende und zur Pressfläche ausgerichtete druckstabile Isolierschicht vorgesehen ist sowie ein sich zumindest abschnittsweise entlang der Pressfläche erstreckendes konduktives Heizband, welches flächenförmig ausgebildet ist und zumindest einseitig sich gegenüber der Pressfläche des Pressstempels herausgeführt ist.

Durch dieses zumindest eine sich zumindest abschnittsweise entlang der Pressfläche erstreckende konduktive Heizband wird ermöglicht, dass die durch das zumindest eine Heizband erzeugte Wärme entsprechend der flächigen Erstreckung des konduktiven Heizbandes auf die Schichten des Stapels übertragen werden können. Zudem kann durch die elektrische Ansteuerung des zumindest einen konduktiven Heizbandes eine sehr schnelle Aufheizung und Abkühlung ermöglicht werden, da das zumindest eine konduktive Heizband eine hohe Wärmeleitfähigkeit und eine geringe Trägheit aufweist. Dadurch können weitgehend durchsatzunabhängige Temperaturwerte eingestellt werden. Insbesondere können kurze Zykluszeiten erzielt werden.

Das Laminierwerkzeug umfasst bevorzugt ein Presspolster umfasst, welches sich zumindest entlang der Pressfläche des Pressstempels erstreckt und an das zumindest eine sich zumindest abschnittsweise erstreckende konduktive Heizband angrenzt und der Isolierschicht gegenüberliegend vorgesehen beziehungsweise vorhanden ist. Dadurch kann zwischen dem konduktiven Heizband und einem Laminierblech, welches auf einer äußersten Schicht des Stapels aufliegt, dieses Presspolster vorgesehen sein. Durch das Presspolster kann eine elektrische Isolierung erzielt werden. Gegebenenfalls können auch Toleranzen, insbesondere in der Ebenheit, ausgeglichen werden.

Nach einer bevorzugten Ausführungsform ist vorgesehen, dass die Isolierschicht, das zumindest eine konduktive Heizband und das Presspolster einen Sandwichaufbau aus Einzelschichten umfasst, die vorteilhafterweise zum Pressstempel fixiert sind. Dieser Sandwichaufbau kann für die einzelnen Schichten, die zu einem Laminatverbund laminiert werden, anwendungsspezifisch ausgewählt und eingesetzt werden.

Alternativ kann vorgesehen sein, dass die Isolierschicht und das zumindest eine konduktive Heizband oder das konduktive Heizband und das Presspolster oder alle drei Schichten, also die Isolierschicht, das zumindest eine konduktive Heizband und das Presspolster als Verbundelement ausgebildet sind. Dadurch können entsprechende Optimierungen anwendungsspezifisch ermöglicht sein.

Die an den Pressflächen des Pressstempels angrenzende Isolierschicht ist bevorzugt druckstabil und elektrisch isolierend oder elektrisch als auch thermisch isolierend ausgebildet. Dadurch kann ein einfacher Aufbau des Laminierwerkzeuges gegeben sein, obwohl eine elektrisch leitfähige Fläche durch das konduktive Heizband gebildet ist. Insbesondere durch die thermische Isolierung kann erzielt werden, dass die Wärmeübertragung des konduktiven Heizbandes ausschließlich in Richtung auf den Stapel von Schichten, die zu laminieren sind, gerichtet werden kann.

Das Presspolster kann bevorzugt elektrisch isolierend ausgebildet sein. In einem solchen Fall können die bereits eingesetzten Laminierbleche, die aus einem metallischen Metall bestehen, weiter verwendet werden.

Vorteilhafterweise ist das Presspolster aus einer Kunststofffolie, insbesondere Polyimidfolie, ausgebildet. Dabei können Dicken der Folie von kleiner 1 mm, vorzugsweise mit einer Dicke von 0,1 bis 0,5 mm eingesetzt werden. Alternativ kann das Presspolster auch in Form einer auf das Laminierblech aufgesprühten Lackschicht oder durch eine sonstige elektrisch nicht leitende Beschichtung ausgebildet sein.

Das zumindest eine konduktive Heizband des Laminierwerkzeuges, welches gegenüber der Pressfläche des Pressstempels zumindest einseitig flächig herausgeführt ist, bildet bevorzugt einen Anschlussabschnitt, entlang dem sich eine Anschlussleiste erstreckt, welche mit einem Stromkreislauf kontaktierbar ist. Diese Anschlussleiste hat insbesondere einen großen Leiterquerschnitt und erstreckt sich vorteilhafterweise vollständig über die gesamte Breite des Heizbandes, um einen möglichst gleichmäßige Einleitung des Stromes über die gesamte Breite des Heizbandes zu erzielen. An die Anschlussleisten kann auch ein separater Messstromkreis angeschlossen werden, welcher den temperaturabhängigen Widerstand des Heizbandes kontinuierlich misst. Der Temperaturregler für die Heizbänder ermittelt aus diesem Widerstand über eine Korrelation die aktuelle Temperatur im Heizband, welche dann wunschgemäß geregelt werden kann. Das zumindest eine konduktive Heizband weist vorteilhafterweise zwei einander gegenüberliegende und aus dem Pressbereich des Pressstempels herausgeführte Anschlussabschnitte auf. Vorteilhafterweise weist das zumindest eine konduktive Heizband eine rechteckförmige Kontur auf. Dadurch kann eine einfache und kostengünstige Ausgestaltung gegeben sein.

Der zumindest eine Anschlussabschnitt des zumindest einen konduktiven Heizbandes, der sich von der Anschlussleiste bis zur Pressfläche erstreckt, weist vorteilhafterweise eine metallische Beschichtung, insbesondere eine Kupferummantelung oder Verkupferung, auf. Diese Ausgestaltung weist den Vorteil auf, dass aufgrund der Vergrößerung des

Querschnittes des Anschlussabschnitts eine Verringerung des elektrischen Widerstandes gegeben ist, wodurch die Wärmeverluste außerhalb der Pressfläche gering gehalten werden können.

Bei der Laminiervorrichtung ist vorgesehen, dass das zumindest eine konduktive Heizband zumindest innerhalb der Pressfläche streifenförmig ausgebildet und zueinander beabstandete Einzelbänder aufweist. Diese Einzelbänder weisen bevorzugt entlang des Pressbereiches eine konstante Breite auf. Durch diese Einzelbänder kann ermöglicht werden, dass innerhalb des Pressbereiches des Pressstapels eine gleichmäßigere Wärmeverteilung und Übertragung auf die Laminierbleche ermöglicht wird.

Das zumindest eine konduktive Heizband, welches die Einzelbänder umfasst, ist vorteilhafterweise derart ausgebildet, dass sich die Einzelbänder in den Anschlussabschnitt hineinerstrecken, vorzugsweise jedoch nicht bis in die Anschlussleiste hinein. Dadurch kann die Anschlussleiste sich vollständig entlang dem Anschlussabschnitt erstrecken und eine gleichmäßige Stromzuführung über die gesamte Breite des Anschlussabschnittes ermöglichen.

Gemäß einer weiteren alternativen Ausgestaltung des konduktiven Heizbandes aus Einzelbändern ist vorgesehen, dass die Einzelbänder mit Abständen zueinander angeordnet sind, oder zwischen den Einzelbändern Ausnehmungen vorgesehen sind, und die Einzelbänder eine gleiche Breite aufweisen. Alternativ hierzu kann vorgesehen sein, dass die Breite der Einzelbänder des konduktiven Heizbandes von außen nach innen bzw. bis zur Mittelachse des Heizbandes hin in der Breite sich verringern. Dadurch werden die Abstände zu den einzelnen Einzelbändern oder die Ausnehmungen zwischen den Einzelbändern vergrößert. Des Weiteren kann alternativ vorgesehen sein, dass die Abstände oder Ausnehmungen zwischen den Einzelbändern sich von außen nach innen bzw. zur Mittelachse des Heizbandes bzw. des Pressbereiches hin vergrößern und die Breite der Einzelbänder gleichbleibt.

Bei diesen drei zuletzt genannten Varianten kann wiederum eine gleichmäßigere Wärmeverteilung über den gesamten Pressbereich erzielt werden, um eine gleichmäßige Aufheizung des Laminierbleches und somit der daran angrenzenden äußeren Schicht sowie der darunterliegenden Schichten ermöglicht sein.

Nach einer weiteren bevorzugten Ausgestaltung des Laminierwerkzeuges ist vorgesehen, dass das konduktive Heizband aus wenigstens zwei im Pressbereich nebeneinander angeordneten oder übereinander ausgerichteten Heizbandabschnitten ausgebildet sind, welche zueinander elektrisch in Reihe geschalten sind. Durch die Reihenschaltung und beispielsweise der zwei nebeneinander oder übereinander angeordneten Heizbandabschnitten wird ermöglicht, dass die Stromflussrichtung in den benachbarten Heizbandabschnitten in entgegengesetzter Richtung erfolgen, so dass sich gegebenenfalls negative Einflüsse durch Induktion kompensieren können.

Die beiden benachbarten Enden der zueinander ausgerichteten Heizbandabschnitte, die elektrisch in Reihe geschalten sind, werden bevorzugt durch eine Brücke, welche an den Anschlussleisten angreift, direkt miteinander verbunden.

Bei der Ausführungsform des Laminierwerkzeuges mit übereinanderliegenden Heizbandabschnitten ist bevorzugt vorgesehen, dass zwischen den zwei übereinanderliegenden Heizbandabschnitten eine elektrische isolierende Schicht angeordnet ist. Diese Anordnung weist den Vorteil auf, dass das konduktive Heizband gleichmäßig über die ganze Fläche druckstabil ausgebildet ist. Vorteilhafterweise sind zwei benachbarte Anschlussleisten mit dem Stromkreislauf kontaktierbar und die gegenüberliegenden Anschlussleisten durch eine Brücke über die ganze Breite des Heizbandes, beispielsweise durch ein elektrisch leitendes Blech, miteinander verbunden sind.

Des Weiteren kann bevorzugt vorgesehen sein, dass parallel zum Stromkreis zur Ansteuerung des zumindest einen konduktive Heizbandes ein Messstromkreis für die Temperaturregelung vorgesehen beziehungsweise angeschlossen ist. Dadurch kann eine direkte und exakte Ansteuerung des zumindest einen konduktiven Heizbandes ermöglicht sein.

Bevorzugt ist vorgesehen, dass das konduktive Heizband aus einem metallisch leitenden Material ausgebildet ist. Vorteilhafterweise wird Stahl oder Edelstahl eingesetzt. Dieses Material weist einer hohen Korrosionsbeständigkeit zugleich eine hohe Druckstabilität auf.

Die der Erfindung zugrundeliegende Aufgabe wird des Weiteren durch eine Laminiervorrichtung zum Laminieren von mehreren in einem Stapel angeordneten Schichten zu einem Laminatverbund gelöst, welche ein oberes und ein unteres Laminierwerkzeug umfasst, zwischen denen der Stapel von Schichten anordenbar ist, wobei zwischen dem Stapel und dem oberen und unteren Laminierwerkzeug jeweils ein Laminierblech oder Laminierband vorgesehen ist, und das obere und/oder untere Laminierwerkzeug nach einem der vorgeschriebenen Ausführungsformen ausgebildet beziehungsweise vorgesehen ist. Diese Laminiervorrichtung ermöglicht aufgrund der direkten großflächigen oder vollflächigen Aufheizung der Laminierbleche oder Laminierbänder und somit des Stapels kurze Prozess- und Zykluszeiten. Darüber hinaus kann durch die kontrollierte und direkte Überwachung der Aufheiztemperatur des konduktiven Heizbandes eine Reduzierung von Ausschusszahlen möglich sein. Insbesondere kann durch die Reduzierung von zeitlichen Verlusten bei der Aufheizung des Laminierblechs oder Laminierbänder ein erhöhter Durchsatz von beispielsweise 30 bis 50 % in der Herstellung von Laminatverbunden ermöglicht werden.

Zwischen dem oberen und unteren Laminierwerkzeug bzw. Laminierblech kann eine Laminierkassette anordenbar sein. Dies weist den Vorteil auf, dass innerhalb der Laminierkassette die einzelnen Schichten zueinander exakt ausgerichtet bereitgestellt werden, so dass die einzelnen Schichten in einer exakten Ausrichtung zueinander zu dem Laminatverbund laminiert werden.

Gemäß einer bevorzugten Ausführungsform der Laminiervorrichtung kann vorgesehen sein, dass das Laminierblech und das Presspolster einteilig ausgebildet sind. Alternativ ist auch möglich, dass das Laminierblech und das Presspolster und das zumindest ein konduktives Heizelement als ein Verbundelement ausgebildet sind. Auch kann vorgesehen sein, dass das Laminierblech und das Presspolster sowie das elektrische Heizelement als auch die Isolierschicht, welche an die Pressfläche des Pressstempels angrenzt, einteilig ausgebildet sind. Dadurch kann eine hohe Druckstabilität im Einsatz und Ausrichtung der Laminiervorrichtung für jeweils zu laminierenden Schichten zum Laminatverbund ermöglicht sein.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Seitenansicht einer Laminiervorrichtung,
- Figur 2: eine schematische Ansicht auf ein konduktives Heizband eines Laminierwerkzeuges der Laminiervorrichtung gemäß Figur 1,
- Figur 3: eine schematische Ansicht auf eine alternative Ausführungsform des konduktiven Heizbandes gemäß Figur 2,
- Figur 4: eine schematische Ansicht auf eine weitere alternative Ausführungsform des konduktiven Heizbandes zu Figur 2,
- Figur 5: eine weitere alternative Ausführungsform des konduktiven Heizbandes zu Figur 2,
- Figur 6: eine schematische Seitenansicht einer weiteren alternativen Ausführungsform des konduktiven Heizbandes zu Figur 2,
- Figur 7: eine schematische Ansicht eines Stapels von Schichten zum Laminieren in einer Laminierkassette,
- Figur 8: eine schematische Schnittansicht der Laminierkassette gemäß Figur 7,
- Figur 9: eine schematische Ansicht von oben auf eine Laminierstation, und
- Figur 10: eine schematische Seitenansicht einer alternativen Ausführungsform der Laminierstation zur Figur 9.

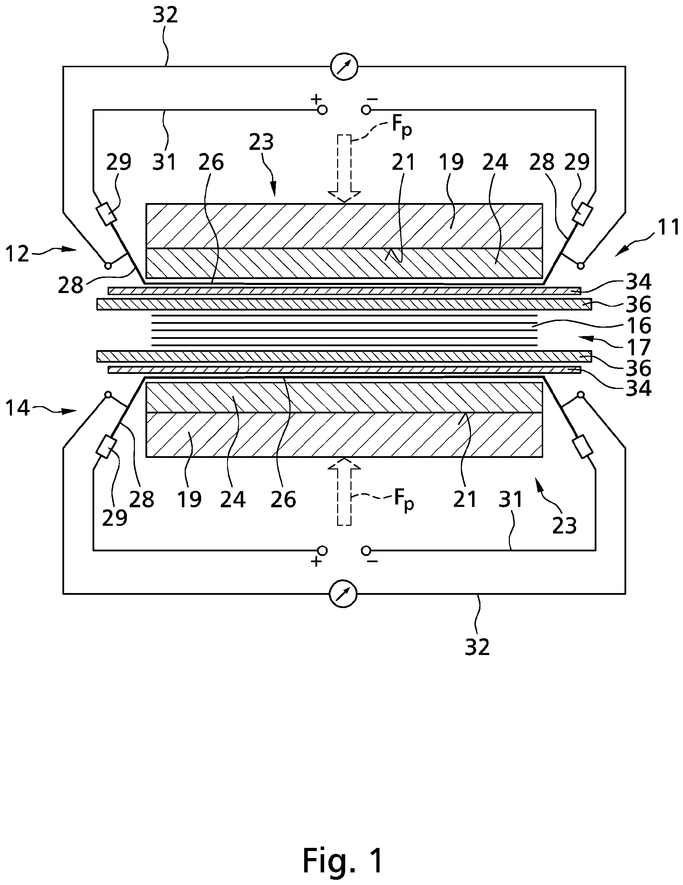

In Figur 1 ist eine schematische Seitenansicht einer Laminiervorrichtung 11 dargestellt. Diese Laminiervorrichtung 11 umfasst ein oberes Laminierwerkzeug 12 sowie ein unteres Laminierwerkzeug 14. Diese Laminiervorrichtung 11 wird zum Laminieren von mehreren Schichten 16, die zu einem Stapel 17 übereinanderliegend angeordnet sind, zu einem Laminatverbund laminiert. Nach dem Laminieren sind die Schichten zu einem Laminatverbund miteinander verbunden. Vorzugsweise ist ein homogener Laminatverbund ausgebildet, bei dem alle Schichten stoffschlüssig miteinander verbunden sind.

Dieser Laminatverbund kann als ein Dokumentenkörper, insbesondere als ein Sicherheits- oder Wertdokument ausgebildet sein. Auch weitere Identifikationsdokumente oder Scheckkarten, VISA-Karten oder dergleichen können durch den Schichtverbund gebildet werden. Im Falle eines Sicherheitsdokumentenkörpers kann beispielsweise ein ID3-Dokument oder ein ID1-Dokument vorgesehen sein. Das ID1- oder ID3-Dokument kann beispielsweise aus drei bis fünfzehn Schichten 16 bestehen. Auch können Sicherheitsdokumente mit einem RFID-Chip oder anderen elektronischen Bauelementen, sogenannten Inlays, zwischen den einzelnen Schichten oder innerhalb der oder den Schichten vorgesehen sein, die nach dem Laminieren einen Laminatverbund bzw. einen Verbundkörper bilden.

Als Schichten 16 für einen solchen Laminatverbund werden beispielsweise thermoplastische Schichten eingesetzt, insbesondere Polycarbonat. Weitere Materialien, die durch Druck und Temperatur mit einem weiteren Material laminiert werden können, kommen ebenso zum Einsatz.

Das obere und untere Laminierwerkzeug 12, 14 sind bevorzugt gleich aufgebaut. Diese können aber auch voneinander abweichen. Im Folgenden wird beispielhaft das obere Laminierwerkzeug 12 beschrieben. Diese Beschreibung gilt ebenso für das untere Laminierwerkzeug 14.

Das obere Laminierwerkzeug 12 umfasst einen Pressstempel 19. Dieser Pressstempel 19 weist eine Pressfläche 21 auf, welche zum Stapel 17 gerichtet ist. Diese Pressfläche 21 gegenüberliegend ist ein maschinenseitiger Anschluss bzw. Anschlussfläche 23 vorgesehen. An diesem maschinenseitigen Anschluss 23 kann ein nicht näher dargestellter Antrieb der Laminiervorrichtung 11, insbesondere ein Zylinder bzw. ein Hubzylinder, angreifen, um das obere Laminierwerkzeug 12 in Richtung auf den Stapel 17 zuzubewegen. Dies ist beispielhaft durch die Pfeile Fp dargestellt, welche die Presskraft und Pressrichtung symbolisieren.

Die Pressfläche 21 des Pressstempels 19 bildet einen Pressbereich für die Laminiervorrichtung 11 zwischen dem oberen und unteren Laminierwerkzeug 12, 14. Diese Pressfläche 21 kann ein Format umfassen, welche gleich oder größer als ein Format der Schichten 16 ist, die zu einem Laminatverbund zu laminieren sind. Beispielsweise kann die Pressfläche 21 quadratisch oder rechteckförmig ausgebildet sein.

Dem Pressstempel 19 zugeordnet ist eine Isolierschicht 24 vorgesehen. Diese Isolierschicht 24 erstreckt sich vorteilhafterweise vollflächig entlang der Pressfläche 21 des Pressstempels 19. Diese Isolierschicht 24 kann getrennt zu dem Pressstempel 19 vorgesehen sein oder mit diesem dauerhaft verbunden sein. Die Isolierschicht 24 ist druckstabil. Diese Isolierschicht 24 ist bevorzugt thermisch isolierend. Insbesondere kann die Isolierschicht 24 thermisch isolierend und auch elektrisch isolierend ausgebildet sein. Der Isolierschicht 24 zugeordnet und dem Pressstempel 19 gegenüberliegend ist zumindest ein konduktives Heizband 26 vorgesehen. Dieses zumindest eine konduktive Heizband 26 liegt an der Isolierschicht 24 an. Dieses zumindest eine konduktive Heizband 26 erstreckt sich zumindest abschnittsweise entlang der Pressfläche 21 des Pressstempels 19. Vorteilhafterweise sind einander gegenüberliegend Anschlussabschnitte 28 an dem konduktiven Heizband 26 vorgesehen, die seitlich gegenüber der Pressfläche 21 hervortreten. Am jeweiligen Ende des Anschlussabschnitts 28 ist eine Anschlussleiste 29 vorgesehen. Diese Anschlussleiste 29 dient zur Kontaktierung mit einem Stromkreis 31. Als Spannungsquelle für den Stromkreis kann eine Gleichspannungsquelle als auch eine Wechselspannungsquelle vorgesehen sein. Weitere regelungstechnische Komponenten des Stromkreises 31 sind nicht näher dargestellt. Durch diesen Stromkreis 31 wird das konduktive Heizband 26 bestromt und aufgeheizt. Zusätzlich kann ein Messstromkreis 32 vorgesehen sein. Dieser kann an den Anschlussabschnitten 28 kontaktiert werden, um die Temperatur des konduktive Heizbandes 26 zu ermitteln.

Die Kontaktierung der Anschlussabschnitte 28 außerhalb der Pressfläche 21 am konduktiven Heizband 26 weist den Vorteil auf, dass einfache Verhältnisse im Bereich der Pressfläche 21 gegeben sind, wodurch auch eine gleichmäßige vollständige Druckübertragung durch den Pressstempel 19 auf den Stapel 17 ermöglicht ist.

Dem konduktiven Heizband 26 zugeordnet und gegenüberliegend zur Isolierschicht 24 ist ein Presspolster 34 vorgesehen. Dieses Presspolster 34 ist vorzugsweise elektrisch isolierend ausgebildet. Dieses Presspolster 34 ist des Weiteren bevorzugt wärmeleitend ausgebildet. Vorteilhafterweise kann eine Kunststofffolie, insbesondere Polyimidfolie vorgesehen sein, welche eine Schichtdicke von weniger als 1 mm aufweist, vorzugsweise eine Schichtdicke in einem Bereich von 0,1 bis 0,3 mm umfasst. Auch kann das Presspolster 34 als eine Lackschicht auf dem Laminierblech 36, insbesondere elektrisch isolierende Lackschicht ausgebildet sein. Des Weiteren ist ein Laminierblech 36 vorgesehen. Dieses Laminierblech 36 kann Teil des oberen Laminierwerkzeuges 12 sein. Dieses Laminierblech 36 kann auch separat zum oberen Laminierwerkzeug 12 ausgebildet sein und bedarfsweise eingesetzt und zum Presspolster 34 ausgerichtet werden.

Durch die Positionierung des zumindest ein konduktiven Heizbandes 26 unmittelbar zum Laminierblech 36 unter Zwischenschaltung eines sehr dünnen und insbesondere wärmeleitenden Presspolsters 34 kann durch die Bestromung des konduktiven Heizbandes 26 eine unmittelbare Wärmeübertragung und Aufheizung des Laminierblechs 36 erfolgen. Dadurch kann eine direkte und schnelle Aufheizung ermöglicht werden. Des Weiteren kann eine vollflächige Aufheizung des Laminierblechs 36 erfolgen. Dadurch kann eine hohe Taktzeit erzielt wird. Des Weiteren kann durch diesen Aufbau ermöglicht werden, dass ein Überschwingen der Temperatur im Stapel 17 verhindert wird, da unmittelbar nach dem Abschalten des Stromkreises 31 die Temperatur des konduktiven Heizbandes 26 sinkt. Dadurch können nachteilige Nachheizeffekte vermieden werden.

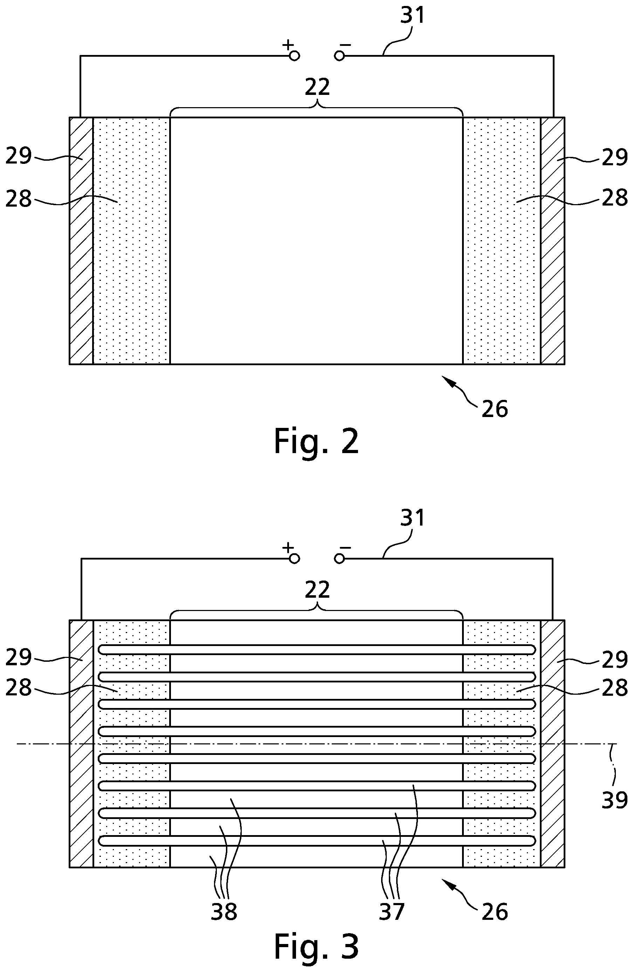

In Figur 2 ist eine schematische Ansicht von oben gemäß einer ersten Ausführungsform auf ein konduktives Heizband 26 dargestellt. Dieses konduktive Heizband 26 ist flächenförmig ausgebildet. Vorteilhafterweise besteht das konduktive Heizband 26 aus einer Metallschicht, insbesondere aus Stahl oder aus Edelstahl. Solche Metallschichten können beispielsweise 0,2 bis 2 mm dick ausgebildet sein. Dieses konduktive Heizband 26 ist bevorzugt unbeschichtet, so dass eine direkte Kontaktierung einerseits mit der Isolierschicht 24 und andererseits mit dem Presspolster 34 ermöglicht ist. Alternativ kann zumindest das sich entlang der Pressfläche 21 erstreckende konduktive Heizband 26 auch ein- oder beidseitig eine elektrisch isolierende Schicht oder Beschichtung, wie beispielsweise Lackschicht, aufweisen.

Im Ausführungsbeispiel ist die Pressfläche 21 des Pressstempels 19 rechteckförmig ausgebildet. Alternativ kann die Pressfläche auch quadratisch sein. Auch weitere geometrische Formen sind möglich. Das konduktive Heizband 26 erstreckt sich vollflächig entlang der Pressfläche 21. Die Pressfläche 21 entspricht einem Pressbereich 22, der in Figur 2 dargestellt ist. An die Pressfläche 21 anschließend und einander gegenüberliegend sind Anschlussabschnitte 28 vollflächig, ausgebildet. An die Anschlussabschnitte 28 angrenzend ist jeweils abschließend die Anschlussleiste 29 vorgesehen. Diese Anschlussleiste 29 erstreckt sich vorteilhafterweise vollständig entlang der Stirnseite des Anschlussabschnittes 28. An diese Anschlussfläche 29 ist jeweils ein elektrischer Leiter des Stromkreises 31 kontaktierbar. Die Anschlussabschnitte 28 sind bei dieser Ausführungsform vollflächig ausgebildet. Zusätzlich können die Anschlussabschnitte 28 auf der Ober- und/oder Unterseite mit einer metallischen Beschichtung, wie beispielsweise eine Verkupferung aufweisen. Dadurch wird ein elektrischer Widerstand im Bereich der Anschlussabschnitte 28 reduziert und somit bei der Bestromung des konduktiven Heizbandes 26 ein geringerer Wärmeverlust in den Anschlussabschnitten 28 erzielt. Dies ermöglicht eine verbesserte Aufheizung des konduktiven Heizbandes 26 im Bereich der Pressfläche 21.

In Figur 3 ist eine alternative Ausführungsform des konduktiven Heizbandes 26 zur Figur 2 dargestellt. Ausgehend von dem konduktiven Heizband 26 gemäß Figur 2 ist bei der Ausführungsform gemäß Figur 3 vorgesehen, dass das konduktive Heizband 26 Ausnehmungen 37 aufweist. Diese Ausnehmungen 37 sind beispielsweise langlochförmig ausgebildet. Diese langlochförmigen Ausnehmungen 37 können sich entlang der Pressfläche 21 bzw. im Pressbereich 22 erstrecken. Diese Ausnehmungen 37 können sich jedoch sowohl im Bereich der Pressfläche 21 erstrecken als auch in den/die Anschlussabschnitte 28 hineinragen, wie dies dargestellt ist. Durch diese Ausnehmungen 37 werden bevorzugt mehrere, insbesondere parallel, zueinander ausgerichtete Einzelbänder 38 ausgebildet. Diese Einzelbänder 38 erstrecken sich sowohl im Bereich der Pressfläche 21 als auch in den Anschlussabschnitt 28 hinein. Unbeeinflusst bleibt jedoch die jeweilige Anschlussleiste 29, die sich vollständig entlang der Stirnseite der Anschlussabschnitte 28 erstreckt.

Durch diese Ausführungsform gemäß Figur 3 kann eine gleichmäßigere Wärmeverteilung über die gesamte Pressfläche 21 bzw. den Pressbereich 22 erzielt werden. Eine tendenzielle Temperaturerhöhung im mittleren Bereich der Pressfläche 21 gegenüber dem Randbereich der Pressfläche 21 kann entgegengewirkt werden.

Im Ausführungsbeispiel gemäß Figur 3 sind die Ränder der Einzelbänder 38 parallel zueinander ausgerichtet. Diese können auch eine Wellenform oder alternative Geometrien umfassen. Auch kann vorgesehen sein, dass die Einzelbänder 38 gemäß Figur 3 im Verlauf vom linken Anschlussabschnitt zum rechten Anschlussabschnitt 28 voreinander abweichende Abstände aufweisen können, wobei eine kontinuierliche Aufweitung und/oder Verschmälerung als auch eine diskontinuierliche Aufweitung und/oder Verschmälerung vorgesehen sein kann.

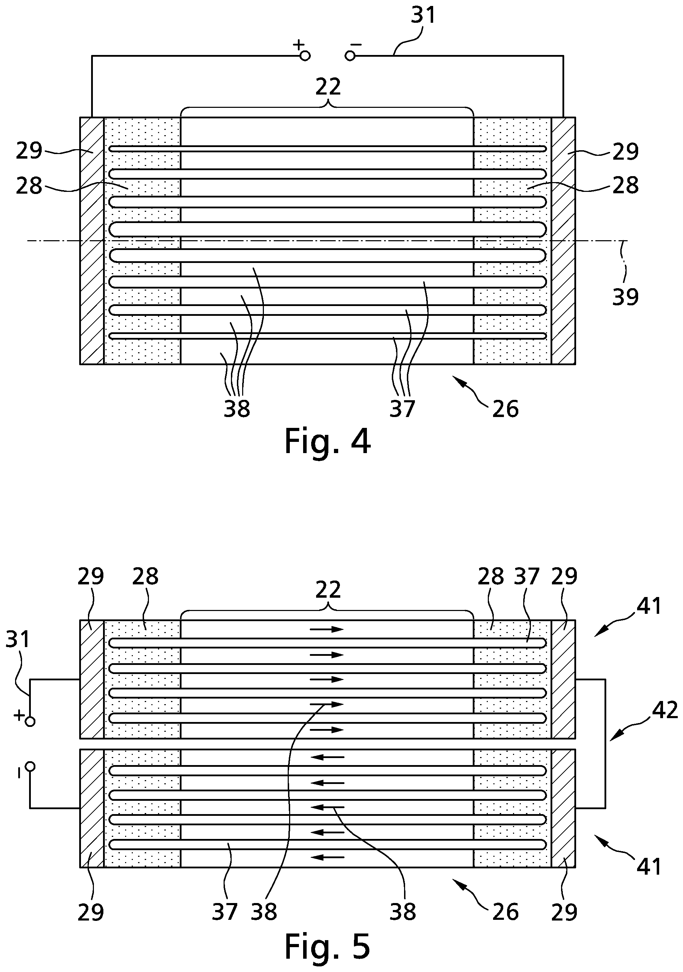

In Figur 4 ist eine alternative Ausführungsform zur Figur 3 für die Ausgestaltung des konduktiven Heizbandes 26 dargestellt. Bei dieser Ausführungsform ist vorgesehen, dass die Breite der Einzelbänder 38 zur Mittelachse 39 des konduktiven Heizbandes 26 von außen nach innen abnimmt. Damit geht bei dem Ausführungsbeispiel einher, dass die Breite der Ausnehmungen 37 sich vergrößert. Somit sind im Randbereich sehr schmale Ausnehmungen 37 und im mittleren Bereich, insbesondere nahe oder in der Mittelachse 39 die größte Breite der Ausnehmung 37 oder Ausnehmungen 37 vorgesehen. Alternativ zu dieser Ausführungsform gemäß Figur 4 kann vorgesehen sein, dass die Breite der Einzelbänder 38 gleich ist und dennoch die Abstände zueinander und somit die Ausnehmungen 37 voneinander abweichen. Beispielsweise können bei gleichbreiten Einzelbändern 38 auch die Ausnehmungen 37 in der Breite von innen nach außen zunehmen.

In Figur 5 ist eine Ansicht von oben auf eine weitere alternative Ausführungsform des konduktiven Heizbandes 26 dargestellt. Bei dieser Ausführungsform ist vorgesehen, dass das konduktive Heizband 26 aus zwei Heizbandabschnitten 41 besteht. Diese Heizbandabschnitte 41 sind vorzugsweise gleich ausgebildet. Dieser Heizbandabschnitt 41 entspricht beispielsweise der Ausführungsform gemäß Figur 3. Alternativ können diese Heizbandabschnitte 41 auch gemäß Figur 2 oder Figur 4 oder der dazu jeweils beschriebenen Alternativen ausgebildet sein.

Bei dieser Ausführungsform des konduktiven Heizbandes 26 ist vorgesehen, dass die Heizbandabschnitte 41 elektrisch in Reihe geschalten sind. Beispielsweise ist am oberen Heizbandabschnitt 41 an dessen linken Anschlussleiste 29 ein Pluspol vorgesehen. Die gegenüberliegende Anschlussleiste 29 des oberen Heizbandabschnittes 41 ist mit der benachbarten Anschlussleiste 29 des darunterliegenden Heizbandabschnittes 41 elektrisch kontaktiert. Hierzu kann eine elektrische Leitung, eine Brücke 42 oder dergleichen vorgesehen sein. Am linken Anschlussleiste 29 des unteren Heizbandabschnittes 21 ist ein Minuspol des Stromkreislaufes 31 vorgesehen. Dadurch kann eine Stromflussrichtung gemäß den dargestellten Pfeilen in den jeweiligen Heizbandabschnitten 41 erzielt werden. Dies weist den Vorteil auf, dass durch eine aufgrund der Stromflussrichtung erzeugte Induktion wegen der Richtungsumkehr der Stromflussrichtung mittels einer Gegeninduktion entgegengewirkt werden kann. Insbesondere im mittenzentrierten Bereich der Pressfläche 21 kann dadurch einer unerwünschten Temperaturüberhöhung entgegengewirkt werden.

Die Ausgestaltung des konduktiven Heizbandes 26 kann auch zwei, drei, vier oder mehrere nebeneinander angeordnete und in Reihe miteinander geschaltene Heizbandabschnitte 41 umfassen.

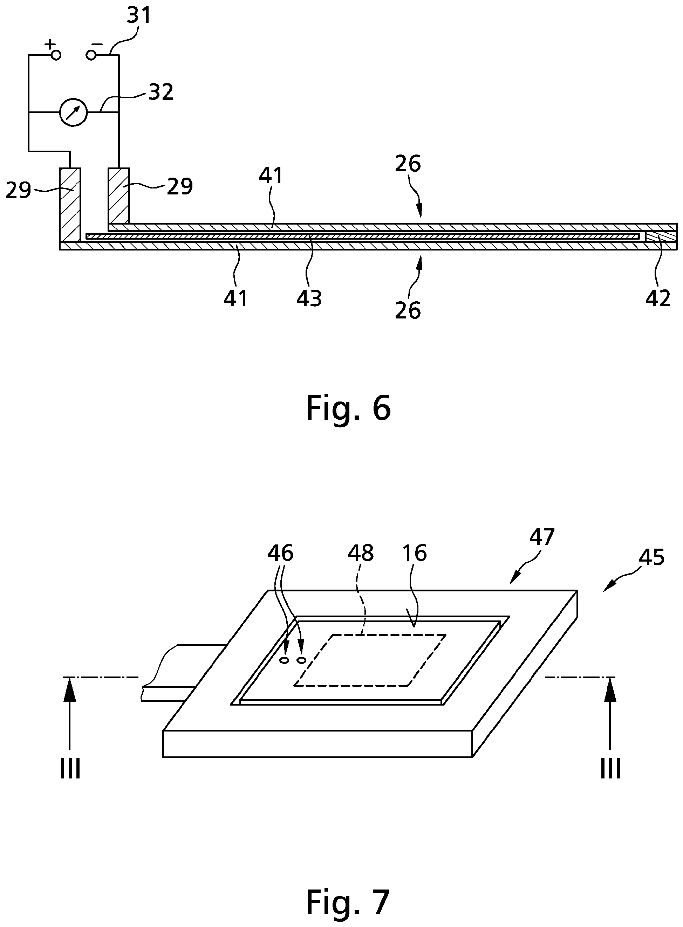

In Figur 6 ist eine schematische Seitenansicht einer weiteren alternativen Ausführungsform des konduktiven Heizbandes 26 zur Figur 5 dargestellt. Bei dieser Ausführungsform in Figur 6 ist vorgesehen, dass die Heizbandabschnitte 41 übereinanderliegend angeordnet sind, und vorzugsweise deckungsgleich zueinander ausgerichtet sind. Zwischen den Heizbandabschnitten 41 ist eine Isolierschicht 43 vorgesehen, welche als elektrische Isolierschicht beispielsweise in Form einer Kunststofffolie insbesondere einer Polyimidfolie ausgebildet sein kann. Die Heizbandabschnitte 41 sind bei dieser Ausführungsform gemäß Figur 6 bevorzugt vollflächig ausgebildet, wie dies in Figur 2 dargestellt ist. Alternativ könnten auch die Ausführungsformen gemäß Figur 3 und 4 vorgesehen sein. Insbesondere die vollflächige Ausführungsform der konduktiven Heizbandabschnitte 41 weist den Vorteil auf, dass eine verbesserte Verteilung des Pressdrucks ausgehend von der Pressfläche 21 auf den Stapel 17 der Schichten 16 gegeben ist. An einem Ende der Heizbandabschnitte 41 ist an den Anschlussleisten 29 der Stromkreis 31 angeschlossen. Parallel dazu kann der Messstromkreis 32 für die Temperierung angeschlossen sein. Gegenüberliegend werden die Anschlussleisten 29 des oberen und unteren Heizbandabschnittes 21 durch die Brücke 42 miteinander elektrisch kontaktiert. Beispielsweise kann die Brücke 42 als eine elektrisch leitende Schicht dazwischenliegend vorgesehen sein, die der Dicke der Isolierschicht 43 entspricht.

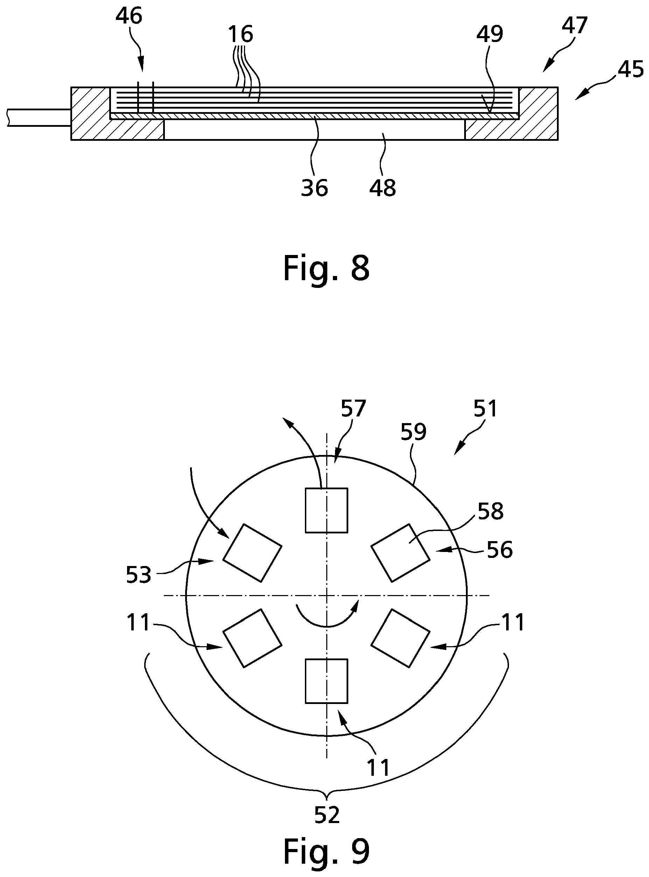

In Figur 7 ist eine perspektivische Ansicht einer Laminierkassette 45 mit darin angeordneten Schichten 16 dargestellt. Die Figur 8 zeigt eine schematische Schnittansicht entlang der Linie III-III in Figur 7. Die Laminierkassette 45 umfasst einen Rahmen 47 mit einer Ausnehmung 48. Durch den die Ausnehmung 48 umlaufenden Rahmen 47 ist eine Auflagefläche 49 für die Schichten 16 gebildet. An der Auflagefläche 49 kann auch ein Laminatblech 36 aufliegen und darüber die Schichten 16 positioniert werden. Durch den Rahmen 47 werden die Schichten 16 zur Ausnehmung 48 ausgerichtet und positioniert. Zusätzlich kann eine Fixiereinrichtung 46, beispielsweise in Form von einer oder mehreren Nadeln, Stifte oder Dorne vorgesehen sein, welche die Schichten 16 durchdringen und dadurch eine Positionierung und Ausrichtung der Schichten 16 innerhalb der Laminierkassette 45 ermöglichen.

Eine solche Laminierkassette 45 kann einer Laminierstation 51, welche beispielsweise in Figur 9 dargestellt ist, zugeführt werden. Zum Zeitpunkt der Zuführung der Laminierkassette 45 in die Laminierstation 51 sind die Schichten 16 lose übereinanderliegend angeordnet. Nach dem Laminierprozess innerhalb der Laminierstation 51 wird die Laminierkassette 45 mit dem Laminatverbund entnommen, wobei die einzelnen Schichten miteinander laminiert sind.

In Figur 9 ist eine schematische Ansicht von oben auf die Laminierstation 51 dargestellt. Diese Laminierstation 51 umfasst eine Heizstation 52 sowie eine dieser nachgeschaltenen Kühlstation 56. Die Heizstation 52 und die Kühlstation 56 sind auf einem Rundtakttisch 59 angeordnet. Dieser Rundtakttisch kann beispielsweise als ein Drehteller ausgebildet sein. Der Heizstation 52 vorgeschalten ist eine Bestückungsstation 53. Der Kühlstation 56 nachgeschalten ist eine Entnahmestation 57. Im Ausführungsbeispiel besteht die Heizstation 52 aus zwei oder drei aufeinander folgende Laminiervorrichtungen 11. Die Kühlstation 56 kann aus nur einem Kühlsegment 58 bestehen.

Die in der Heizstation 52 angeordneten Laminiervorrichtungen 11 entsprechen der Ausführungsform gemäß Figur 1. Bei diesen Laminiervorrichtungen 11 können anwendungsspezifisch die Ausführungsformen der konduktiven Heizbänder 26 gemäß den Figuren 2 bis 6 sowie deren alternativen Ausführungsformen eingesetzt werden.

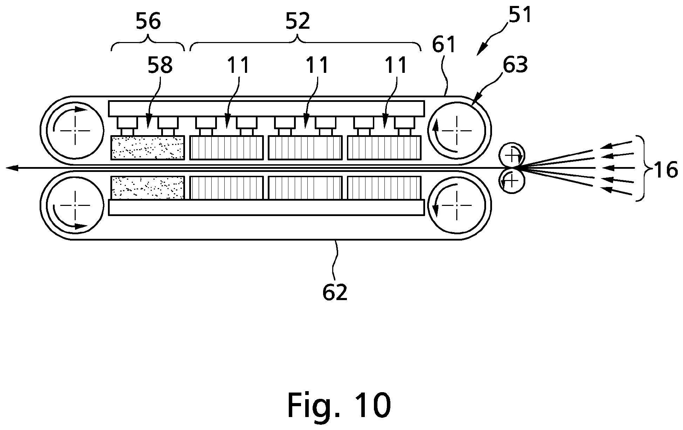

In Figur 10 ist eine alternative Ausführungsform der Laminierstation 51 gemäß Figur 9 dargestellt. Diese Laminierstation 51 umfasst ein oberes und unteres umlaufendes Transportband bzw. Laminierband 61, 62. Innerhalb des oberen und unteren umlaufenden Laminierbandes 61, 62 ist jeweils ein Teil der Heizstation 52 und der Kühlstation 56 vorgesehen, so dass die Laminierbänder 61, 62 dazwischenliegend durchgeführt sind. Eingangsseitig zur Laminierstation 51 werden mehrere Schichten 16 als bahnförmiges Material zugeführt und durch ein Paar von Einlaufwalzen 63 zwischen den Laminierbändern 61, 62 durchgeführt. In der Heizstation 52 können ein oder mehrere Laminiervorrichtungen 11 gemäß Figur 1 vorgesehen sein. Oberhalb der beiden Laminierbänder 61, 62 mit den dazwischen angeordneten Schichten 16 ist das obere Laminierwerkzeug 12 und unterhalb der beiden Laminierbänder 61, 62 ist das untere Laminierwerkzeug 14 vorgesehen. Das konduktive Heizband 26 kann mit seiner Mittelachse 39 quer zur Transportrichtung der Laminierbänder 61, 62 ausgerichtet sein. In der Kühlstation 56 können ein oder mehrere Kühlsegmente 58 vorgesehen sein, wobei die Anzahl der Kühlsegmente 58 gleich oder geringer als die Anzahl der Laminiervorrichtungen 11 gemäß einer bevorzugten Ausführungsform vorgesehen sind.

Bevorzugt wird bei den Laminierstationen 51 gemäß Fig. 9 und Fig. 10 jeweils die erste Heizstation 52 gemäß einer der Ausführungsformen nach Figur 1 bis 6 eingesetzt, um die Schichten 16 zusammen mit den Laminatblechen 36 von einer Raumtemperatur schnell auf die gewünschte Laminiertemperatur aufzuheizen.

In einer kostengünstigen Ausführungsform kann die Laminiervorrichtung 11 gemäß Fig. 9 und Fig. 10 aus jeweils einer Heizstation 52 und einer Kühlstation 56 bestehen.

### Bezugszeichenliste

| | | | |
|---|---|---|---|
| 11. | Laminiervorrichtung | 43. | Isolierschicht |
| 12. | oberes Laminierwerkzeug | 45. | Laminierkassette |
| 14. | unteres Laminierwerkzeug | 46. | Fixiereinrichtung |
| 16. | Schichten | 47. | Rahmen |
| 17. | Stapel | 48. | Ausnehmung |
| 19. | Pressstempel | 49. | Auflagefläche |
| 21. | Pressfläche | 51. | Laminierstation |
| 22. | Pressbereich | 52. | Heizstation |
| 23. | maschinenseitiger Anschluss | 53. | Bestückungsstation |
| 24. | Isolierschicht | 56. | Kühlstation |
| 26. | konduktives Heizband | 57. | Entnahmestation |
| 28. | Anschlussabschnitt | 58. | Kühlsegment |
| 29. | Anschlussleiste | 59. | Rundtakttisch |
| 31. | Stromkreis | 61. | Laminierband |
| 32. | Messstromkreis | 62. | Laminierband |
| 34. | Presspolster | 63. | Einlaufwalzen |
| 36. | Laminatblech | | |
| 37. | Ausnehmung | | |
| 38. | Einzelbänder | | |
| 39. | Mittelachse | | |
| 41. | Heizbandabschnitt | | |
| 42. | Brücke | | |

## Patentansprüche

1. Laminierwerkzeug für eine Laminiervorrichtung (11) zum Laminieren von mehreren in einem Stapel (17) angeordneten Schichten (16) zu einem Laminatverbund,
- mit einem Pressstempel (19), der eine Pressfläche (21) aufweist, die sich innerhalb eines Pressbereiches (22) des Pressstempels (19) erstreckt,
- mit einer sich zumindest entlang der Pressfläche (21) des Pressstempels (19) erstreckenden und zu der Pressfläche (21) ausgerichteten druckstabilen Isolierschicht (24),
- mit einem sich zumindest abschnittsweise entlang der Pressfläche (21) erstreckenden und an die Isolierschicht (24) angrenzenden konduktiven Heizband (26), wobei
- das zumindest eine konduktive Heizband (26) zumindest einen einseitig gegenüber der Pressfläche (21) seitlich herausgeführten Anschlussabschnitt (28) aufweist,
**dadurch gekennzeichnet,**
- **dass** das konduktive Heizband (26) zumindest innerhalb des Pressbereiches (22) der Pressfläche (21) des Pressstempels (19) streifenförmig ausgebildet ist und zueinander beabstandete Einzelbänder (38) aufweist.

2. Laminierwerkzeug nach Anspruch 1, **dadurch gekennzeichnet, dass** ein Presspolster (34) vorgesehen ist, welches sich zumindest entlang der Pressfläche (21) erstreckt, und an das zumindest eine konduktive Heizelement (26) angrenzend vorgesehen ist.

3. Laminierwerkzeug nach Anspruch 2, **dadurch gekennzeichnet, dass** die Isolierschicht (24), das zumindest eine konduktive Heizband (26) und das Presspolster (34) als ein Sandwichaufbau aus einzelnen Schichten ausgebildet ist, oder dass das zumindest eine konduktive Heizband (26) und das Presspolster (34) oder dass die Isolierschicht (24), das zumindest eine konduktive Heizband (26) und das Presspolster (34) als ein Verbundelement, vorzugsweise einteilig, ausgebildet sind.

4. Laminierwerkzeug nach Anspruch 1, **dadurch gekennzeichnet, dass** die Isolierschicht (24) und das zumindest eine konduktive Heizband (26) als ein Verbundelement, vorzugsweise einteilig, ausgebildet sind.

5. Laminierwerkzeug nach einem der vorherigen Ansprüche, **dadurch gekennzeichnet, dass** die druckstabile Isolierschicht (24) elektrisch isolierend, oder dass die druckstabile Isolierschicht (24) elektrisch und thermisch isolierend ausgebildet ist.

6. Laminierwerkzeug nach Anspruch 2, **dadurch gekennzeichnet, dass** das Presspolster (34) elektrisch isolierend und vorzugsweise gut wärmeleitfähig ausgebildet ist, und insbesondere aus einer Kunststofffolie, beispielsweise mit einer Dicke von weniger als 1 mm, insbesondere mit einer Dicke in einem Bereich von 0,1 bis 0,5 mm, ausgebildet ist.

7. Laminierwerkzeug nach einem der vorhergehenden Ansprüche, **dadurch gekennzeichnet, dass** das konduktive Heizband (26), welches sich zumindest teilweise entlang der Pressfläche (21) erstreckt, einen flächenförmig ausgebildeten Anschlussabschnitt (28) aufweist, und an dem Anschlussabschnitt (28) eine Anschlussleiste (29) vorgesehen ist, welche sich entlang des Anschlussabschnittes (28), vorzugsweise entlang des gesamten Anschlussabschnittes (28), erstreckt, der mit einem Stromkreis (31) kontaktierbar ist und vorzugsweise der Anschlussabschnitt (28), der sich von der Anschlussleiste (29) bis zur Pressfläche (21) des konduktiven Heizbandes (26) erstreckt, von einer metallischen Beschichtung umgeben ist, insbesondere eine Kupferummantelung, aufweist.

8. Laminierwerkzeug nach einem der vorhergehenden Ansprüche, **dadurch gekennzeichnet, dass** das konduktive Heizband (26) zwei einander gegenüberliegende und gegenüber der Pressfläche (21) herausgeführte Anschlussabschnitte (28) aufweist, und vorzugsweise das konduktive Heizband (26) ein rechteckförmiges Format umfasst.

9. Laminierwerkzeug nach Anspruch 1, **dadurch gekennzeichnet, dass** sich die Einzelbänder (38) über die Pressfläche (21) hinaus in den Anschlussabschnitt (28) erstrecken, vorzugsweise jedoch nicht bis in die Anschlussleiste (29).

10. Laminierwerkzeug nach Anspruch 1, **dadurch gekennzeichnet,**
- **dass** zwischen den Einzelbändern (38) Ausnehmungen (37) vorgesehen sind, welche in der Breite gleich ausgebildet sind und vorzugsweise die Einzelbänder (38) die gleiche Breite aufweisen, oder
- **dass** die Einzelbänder (38), welche sich zwischen den Anschlussleisten (29) erstrecken, von außen nach innen zur Mittelachse (39) des konduktiven Heizbandes (26) in der Breite sich verringern und die Abstände zwischen den Einzelbändern (38) sich vergrößern, oder
- **dass** die Breite der Einzelbänder (38) gleich ist und die Abstände der Einzelbänder (38) von außen nach innen zur Mittelachse (39) sich vergrößern.

11. Laminierwerkzeug nach einem der vorhergehenden Ansprüche, **dadurch gekennzeichnet, dass** das konduktive Heizband (26) aus wenigstens zwei nebeneinander angeordneten oder wenigstens zwei übereinander ausgerichteten Heizbandabschnitten (21) ausgebildet ist, wobei die Heizbandabschnitte (21) elektrisch in Reihe zueinander geschalten sind und vorzugsweise die übereinander angeordneten Heizbandabschnitte (41) dazwischenliegend eine elektrische Isolierschicht (43) aufweisen, und vorzugsweise den Anschlussleisten (29), die benachbart für die Kontaktierung des Stromkreises (31) angeordnet sind, gegenüberliegend eine leitfähige Beschichtung oder eine Brücke (42) zur Kontaktierung der Heizbandabschnitte (41) vorgesehen ist, welche vorzugsweise in der Dicke dem Isolierelement (43) entspricht.

12. Laminierwerkzeug nach einem der vorhergehenden Ansprüche, **dadurch gekennzeichnet, dass** parallel zum Stromkreis (31) geschalten zur Ansteuerung des zumindest einen konduktiven Heizbandes (26) mit einer Laminiertemperatur ein Messstromkreis (32) für die Temperaturerfassung und/oder Temperaturregelung vorgesehen ist.

13. Laminiervorrichtung zum Laminieren von mehreren in einem Stapel (17) angeordneten Schichten (16) zu einem Laminatverbund,
- mit einem oberen Laminierwerkzeug (12) und einem unteren Laminierwerkzeug (14), zwischen denen der Stapel (17) aus mehreren Schichten (16) anordenbar ist,
- mit einem oberen und einem unteren Laminierblech (36) oder Laminierband (61, 62), welches zwischen dem Stapel (17) und dem oberen Laminierwerkzeug (12) und zwischen dem Stapel (17) und dem unteren Laminierwerkzeug (14) vorgesehen ist,
**dadurch gekennzeichnet,**
- **dass** das obere und/oder das untere Laminierwerkzeug (12, 14) nach einem der Ansprüche 1 bis 12 ausgebildet ist.

14. Laminiervorrichtung nach Anspruch 13, **dadurch gekennzeichnet, dass** zwischen dem oberen und dem unteren Laminierblech (36) eine Laminierkassette (45) anordenbar ist, in welcher die einzelnen Schichten (16) zueinander ausgerichtet positioniert sind, und/oder
- dass das Laminierblech (36) und das Presspolster (34) einteilig sind, oder
- dass das Laminierblech (36) und das Presspolster (34) und das zumindest eine konduktive Heizband (26) einteilig sind, oder
- dass das Laminierblech (36), das Presspolster (34), das zumindest eine konduktive Heizband (26) und die Isolierschicht (24) einteilig ausgebildet sind.

## Claims

1. Laminating tool for a laminating device (11) for laminating a plurality of layers (16) arranged in a stack (17) to form a laminate composite,
- having a pressing die (19) which has a pressing surface (21) which extends within a pressing region (22) of the pressing die (19),
- with a pressure-resistant insulating layer (24) extending at least along the pressing surface (21) of the pressing die (19) and aligned with the pressing surface (21),
- with a conductive heating tape (26) extending at least in sections along the pressing surface (21) and adjoining the insulating layer (24), wherein
- the at least one conductive heating tape (26) has at least one connection section (28) which is led out laterally on one side with respect to the pressing surface (21),
**characterized in that**
- the conductive heating tape (26) is of strip-shaped design at least within the pressing region (22) of the pressing surface (21) of the pressing plunger (19) and has individual tapes (38) spaced apart from one another.

2. Laminating tool according to claim 1, **characterized in that** a press pad (34) is provided, which extends at least along the pressing surface (21) and is provided adjacent to the at least one conductive heating element (26).

3. Laminating tool according to claim 2, **characterized in that** the insulating layer (24), the at least one conductive heating tape (26) and the press pad (34) are designed as a sandwich structure comprising individual layers, or **in that** the at least one conductive heating tape (26) and the press pad (34) or **in that** the insulating layer (24), the at least one conductive heating tape (26) and the press pad (34) are designed as a composite element, preferably in one piece.

4. Laminating tool according to claim 1, **characterized in that** the insulating layer (24) and the at least one conductive heating tape (26) are designed as a composite element, preferably in one piece.

5. Laminating tool according to one of the preceding claims, **characterized in that** the pressure-stable insulating layer (24) is electrically insulating, or **in that** the pressure-stable insulating layer (24) is designed to be electrically and thermally insulating.

6. Laminating tool according to claim 2, **characterized in that** the press pad (34) is electrically insulating and preferably has good thermal conductivity, and in particular is formed from a plastic film, for example with a thickness of less than 1 mm, in particular with a thickness in a range from 0.1 to 0.5 mm.

7. Laminating tool according to one of the preceding claims, **characterized in that** the conductive heating tape (26), which extends at least partially along the pressing surface (21), has a connection section (28) of planar design, and a connection strip (29) is provided on the connection section (28), which extends along the connection section (28), preferably along the entire connection section (28), which can be contacted with an electric circuit (31), and preferably the connection section (28), which extends from the connection strip (29) to the pressing surface (21) of the conductive heating tape (26), is surrounded by a metallic coating, in particular a copper coating.

8. Laminating tool according to one of the preceding claims, **characterized in that** the conductive heating tape (26) has two connection sections (28) opposite each other and led out opposite the pressing surface (21), and preferably the conductive heating tape (26) comprises a rectangular format.

9. Laminating tool according to claim 1, **characterized in that** the individual bands (38) extend beyond the pressing surface (21) into the connecting section (28), but preferably not into the connecting strip (29).

10. Laminating tool according to claim 1, **characterized in that**,
- that recesses (37) are provided between the individual bands (38), which recesses have the same width and preferably the individual bands (38) have the same width, or
- **in that** the individual bands (38), which extend between the connecting strips (29), decrease in width from the outside inwards towards the central axis (39) of the conductive heating tape (26) and the distances between the individual bands (38) increase, or
- that the width of the individual bands (38) is the same and the distances between the individual bands (38) increase from the outside inwards to the center axis (39).

11. Laminating tool according to one of the preceding claims, **characterized in that** the conductive heating tape (26) is formed from at least two heating tape sections (21) arranged next to one another or at least two aligned one above the other, the heating tape sections (21) being electrically connected in series with one another and preferably the heating tape sections (41) arranged one above the other having an electrically insulating layer (43) between them, and preferably a conductive coating or a bridge (42) for contacting the heating tape sections (41) is provided opposite the connection strips (29), which are arranged adjacent for contacting the electrical circuit (31), which preferably corresponds in thickness to the insulating element (43).

12. Laminating tool according to one of the preceding claims, **characterized in that** a measuring circuit (32) for temperature detection and/or temperature control is provided in parallel with the electrical circuit (31) for controlling the at least one conductive heating tape (26) with a laminating temperature.

13. Laminating device for laminating a plurality of layers (16) arranged in a stack (17) to form a laminate composite,
- with an upper laminating tool (12) and a lower laminating tool (14), between which the stack (17) of several layers (16) can be arranged,
- with an upper and a lower laminating plate (36) or laminating belt (61, 62), which is provided between the stack (17) and the upper laminating tool (12) and between the stack (17) and the lower laminating tool (14),
**characterized in that**
- the upper and/or the lower laminating tool (12, 14) is designed according to one of claims 1 to 12.

14. Laminating device according to claim 13, **characterized in that** a laminating cassette (45) can be arranged between the upper and the lower laminating plate (36), in which the individual layers (16) are positioned in alignment with one another, and/or
- **in that** the laminating plate (36) and the press pad (34) are in one piece, or
- that the laminating plate (36) and the press pad (34) and the at least one conductive heating tape (26) are in one piece, or
- that the laminating sheet (36), the press pad (34), the at least one conductive heating tape (26) and the insulating layer (24) are formed in one piece.

## Revendications

1. Outil de laminage pour un dispositif de laminage (11) destiné à laminer plusieurs couches (16) disposées en une pile (17) pour former un composite laminé,
- comprenant un poinçon (19) qui présente une surface de pression (21) s'étendant à l'intérieur d'une zone de pression (22) du poinçon (19),
- avec une couche isolante (24) stable à la pression s'étendant au moins le long de la surface de pression (21) du poinçon (19) et alignée avec la surface de pression (21),
- avec un ruban chauffant conducteur (26) s'étendant au moins par sections le long de la surface de pression (21) et adjacent à la couche isolante (24),
- le au moins un ruban chauffant conducteur (26) comporte au moins une section de raccordement (28) sortant latéralement d'un côté par rapport à la surface de pressage (21),
**caractérisé en ce que**
- **en ce que** le ruban chauffant conducteur (26) est réalisé sous forme de bandes au moins à l'intérieur de la zone de pression (22) de la surface de pression (21) du poinçon (19) et comporte des bandes individuelles (38) espacées les unes des autres.

2. Outil de laminage selon la revendication 1, **caractérisé en ce qu'**il est prévu un coussin de pression (34) qui s'étend au moins le long de la surface de pression (21) et auquel est adjacent au moins un élément chauffant conducteur (26).

3. Outil de laminage selon la revendication 2, **caractérisé en ce que** la couche isolante (24), le au moins un ruban chauffant conducteur (26) et le coussin de pression (34) sont réalisés sous la forme d'une structure sandwich composée de couches individuelles, ou **en ce que** le au moins un ruban chauffant conducteur (26) et le coussin de pression (34) ou **en ce que** la couche isolante (24), le au moins un ruban chauffant conducteur (26) et le coussin de pression (34) sont conçus comme un élément composite, de préférence en une seule pièce.

4. Outil de laminage selon la revendication 1, **caractérisé en ce que** la couche isolante (24) et le au moins un ruban chauffant conducteur (26) sont conçus comme un élément composite, de préférence en une seule pièce.

5. Outil de laminage selon l'une des revendications précédentes, **caractérisé en ce que** la couche isolante résistante à la pression (24) est électriquement isolante, ou **en ce que** la couche isolante résistante à la pression (24) est électriquement et thermiquement isolante.

6. Outil de laminage selon la revendication 2, **caractérisé en ce que** le coussin de pression (34) est électriquement isolant et de préférence bien thermoconducteur, et est notamment constitué d'un film plastique, par exemple d'une épaisseur inférieure à 1 mm, en particulier d'une épaisseur comprise entre 0,1 et 0,5 mm.

7. Outil de laminage selon l'une des revendications précédentes, **caractérisé en ce que** le ruban chauffant conducteur (26), qui s'étend au moins partiellement le long de la surface de pression (21), présente une section de raccordement (28) de forme plane, et sur la section de raccordement (28) est prévue une barrette de raccordement (29) qui s'étend le long de la section de raccordement (28), de préférence le long de toute la section de raccordement (28), qui peut être mise en contact avec un circuit électrique (31) et de préférence la section de raccordement (28) qui s'étend de la barrette de raccordement (29) jusqu'à la surface de pression (21) du ruban chauffant conducteur (26) est entourée d'un revêtement métallique, en particulier d'une gaine en cuivre.

8. Outil de laminage selon l'une des revendications précédentes, **caractérisé en ce que** le ruban chauffant conducteur (26) comporte deux sections de raccordement (28) opposées l'une à l'autre et sortant par rapport à la surface de pression (21), et de préférence le ruban chauffant conducteur (26) a une forme rectangulaire.

9. Outil de laminage selon la revendication 1, **caractérisé en ce que** les bandes individuelles (38) s'étendent au-delà de la surface de pression (21) dans la section de raccordement (28), mais de préférence pas jusqu'à la barrette de raccordement (29).

10. Outil de laminage selon la revendication 1, **caractérisé en ce que**
- que des évidements (37) sont prévus entre les bandes individuelles (38), lesquels évidements ont la même largeur et, de préférence, les bandes individuelles (38) ont la même largeur, où
- que les bandes individuelles (38) qui s'étendent entre les barrettes de raccordement (29) diminuent en largeur de l'extérieur vers l'intérieur en direction de l'axe central (39) du ruban chauffant conducteur (26) et que les distances entre les bandes individuelles (38) augmentent, où
- que la largeur des bandes individuelles (38) est identique et que les distances entre les bandes individuelles (38) augmentent de l'extérieur vers l'intérieur en direction de l'axe central (39).

11. Outil de laminage selon l'une des revendications précédentes, **caractérisé en ce que** le ruban chauffant conducteur (26) est formée d'au moins deux sections de bande chauffante (21) disposées côte à côte ou d'au moins deux sections de bande chauffante (21) alignées l'une au-dessus de l'autre de manière , les sections de bande chauffante (21) sont connectées électriquement en série les unes aux autres et que, de préférence, les sections de bande chauffante (41) superposées comportent entre elles une couche isolante électrique (43) et de préférence, un revêtement conducteur ou un pont (42) est prévu en face des barrettes de connexion (29) qui sont disposées de manière adjacente pour la connexion du circuit électrique (31) afin de connecter les sections de bande chauffante (41), lequel pont correspond de préférence à l'épaisseur de l'élément isolant (43).

12. Outil de laminage selon l'une des revendications précédentes, **caractérisé en ce qu'**un circuit de mesure (32) pour la détection et/ou la régulation de la température est prévu en parallèle au circuit électrique (31) pour commander au moins un ruban chauffant conducteur (26) avec une température de laminage.

13. Dispositif de laminage pour laminer plusieurs couches (16) disposées en une pile (17) en un composite laminé,
- comprenant un outil de stratification supérieur (12) et un outil de stratification inférieur (14), entre lesquels la pile (17) composée de plusieurs couches (16) peut être disposée,
- avec une plaque de laminage supérieure et une plaque de laminage inférieure (36) ou une bande de laminage (61, 62), qui est prévue entre la pile (17) et l'outil de laminage supérieur (12) et entre la pile (17) et l'outil de laminage inférieur (14), **caractérisé en ce que**
- **en ce que** l'outil de laminage supérieur et/ou inférieur (12, 14) est conçu selon l'une des revendications 1 à 12.

14. Dispositif de laminage selon la revendication 13, **caractérisé en ce qu'**une cassette de laminage (45) peut être disposée entre la tôle de laminage supérieure et la tôle de laminage inférieure (36), dans laquelle les différentes couches (16) sont positionnées de manière alignées les unes par rapport aux autres, et/ou
- que la plaque de laminage (36) et le coussin de pression (34) sont d'un seul tenant, où
- que la plaque de laminage (36), le coussin de pression (34) et au moins un ruban chauffant conducteur (26) sont d'un seul tenant, ou
- que la tôle de laminage (36), le tampon de pression (34), le au moins un ruban chauffant conducteur (26) et la couche isolante (24) sont réalisés d'un seul tenant.
